# EUROPÄISCHE PATENTANMELDUNG

(11) **EP 2 206 561 A1**
(43) Veröffentlichungstag der Anmeldung: **14.07.2010**
(21) Anmeldenummer: 09003904.1
(22) Anmeldetag: 18.03.2009
(51) Int. Cl.: B05B 12/00, B08B 7/00, B24C 1/00

(54) **Düse für eine Reinigungseinrichtung zum Reinigen mit einem Gemisch aus cryogenem Medium und Luft und Verfahren zum Reinigen mit einem Gemisch aus cryogenem Medium und Luft**

(30) Priorität: 07.01.2009 DE 102009003991; 28.01.2009 DE 102009006378
(71) Anmelder: Linde AG, 80331 München (DE)
(72) Erfinder: Rebhan, Dieter, 82538 Geretsried-Gelting (DE); Buinger, Alexander, 81476 München (DE); Schmand, Ralf, 85716 Unterschleißheim (DE); Hauner, Matthias, 38165 Lehre (DE)
(74) Vertreter: Schüssler, Andrea

(57) **Zusammenfassung**

Die vorliegende Erfindung betrifft eine Düse (1) für eine Reinigungseinrichtung zum Reinigen mit einem Gemisch aus cryogenem Medium und Luft und ein Verfahren zum Reinigen mit einem Gemisch aus cryogenem Medium und Luft.

## Beschreibung

Die vorliegende Erfindung betrifft eine Düse für eine Reinigungseinrichtung zum Reinigen mit einem Gemisch aus cryogenem Medium und Luft und ein Verfahren zum Reinigen mit einem Gemisch aus cryogenem Medium und Luft.

Beim Reinigen mit einem Gemisch aus cryogenem Medium und Luft (z.B. bei CO₂-Reinigungsverfahren) werden beispielsweise -78 °C kalte Trockeneis-Pellets mit hoher Geschwindigkeit auf eine zu reinigende Oberfläche "geschossen". Weil das Trockeneis dabei unmittelbar in den gasförmigen Zustand übergeht, werden die Verunreinigungen abgelöst, ohne dass Strahlmittelreste (z.B. Schmutzwasser oder Sand) zurückbleiben.

Durch Druck- oder Temperaturschwankungen in der Gasversorgung ist das Reinigungsergebnis zum Teil erheblichen Schwankungen unterworfen. Insbesondere bei automatisierten Reinigungsprozessen stellen ungleichmäßige Reinigungsergebnisse ein erhebliches Problem dar, da sie zu einer erheblichen Qualitätseinbuße und zu einem hohen Ausschuss führen können. Vor allem zu Beginn des Reinigungsvorgangs kann die CO₂-Zufuhr durch Blasen in den Leitungen unstetig sein. Dies kann zu einem so genannten "Spucken" der Düse der Reinigungseinrichtung führen.

Aufgabe der vorliegenden Erfindung ist es eine Düse für eine Reinigungseinrichtung zum Reinigen mit einem Gemisch aus cryogenem Medium und Luft und ein Verfahren zum Reinigen mit einem Gemisch aus cryogenem Medium und Luft bereitzustellen, bei dem eine ungleichmäßige Ausgabe des Gemisches zuverlässig vermieden wird.

Die Aufgabe wird mit einer Düse gemäß Anspruch 1, einer Reinigungseinrichtung gemäß Anspruch 12, einem Düsenaufsatz gemäß Anspruch 13 und einem Verfahren gemäß Anspruch 14 gelöst.

Die Aufgabe wird erfindungsgemäß dadurch gelöst, dass die Ausgabe des Reinigungsmediums überwacht wird.

Erfindungsgemäß ist eine Düse für eine Reinigungseinrichtung zum Reinigen mit einem Gemisch aus cryogenem Medium und Luft vorgesehen, wobei die Düse mit einem optischen Sensor zum Detektieren des Gemisches versehen ist.

Somit kann die Menge des ausgegebenen Gemisches zuverlässig überwacht werden und ein gleich bleibendes Reinigungsergebnis wird sichergestellt.

Mittels der erfindungsgemäßen Düse ist es außerdem möglich den Anteil an cryogenem Medium im Gemisch zu detektieren. Auf diese Weise kann festgestellt werden, ob die Reinigungswirkung des Gemisches ausreicht, um eine zu reinigende Oberfläche vollständig von Verschmutzungen zu befreien.

Insbesondere ist es mit der erfindungsgemäßen Düse möglich zu erkennen, ab welchem Zeitpunkt eine unregelmäßige Ausgabe des Gemisches bzw. das sogenannte "Spucken" beendet ist und mit der Reinigung begonnen werden kann. Eine ungleichmäßige Ausgabe erfolgt zumeist zu Beginn der Ausgabe des Mediums.

Auf diese Weise kann mit der erfindungsgemäßen Düse sichergestellt werden, dass immer ein optimales Reinigungsergebnis erzielt wird.

Daher eignet sich die Düse besonders gut beim Einsatz in automatisierten Anlagen, da das Reinigungsergebnis permanent oder intervallweise überwacht werden kann.

Vorteilhafte Ausgestaltungen der Erfindung sind in den Unteransprüchen angegeben.

Die Erfindung wird im folgenden anhand der schematischen Zeichnungen näher erläutert. Diese zeigen in:
Fig. 1 ein erstes Ausführungsbeispiel einer erfindungsgemäßen Düse,
Fig. 2 eine Beispielschaltung für einen optischen Sensor,
Fig. 3 ein zweites Ausführungsbeispiel der erfindungsgemäßen Düse,
Fig. 4 ein drittes Ausführungsbeispiel der erfindungsgemäßen Düse.
Fig. 5 einen Schnitt durch die Düse gemäß einem weiteren Ausführungsbeispiel in der optische Sensoren seitlich zum Strahlengang des von einer Beleuchtungseinrichtung ausgesendeten Lichts angeordnet sind,
Fig. 6 ein Ausführungsbeispiel einer Reinigungseinrichtung die mit einem optischen Sensor versehen ist,
Fig. 7 ein weiteres Ausführungsbeispiel einer Reinigungseinrichtung die mit einem optischen Sensor versehen ist, und
Fig. 8 eine Schneestrahldüse die mit einem optischen Sensor versehen ist.

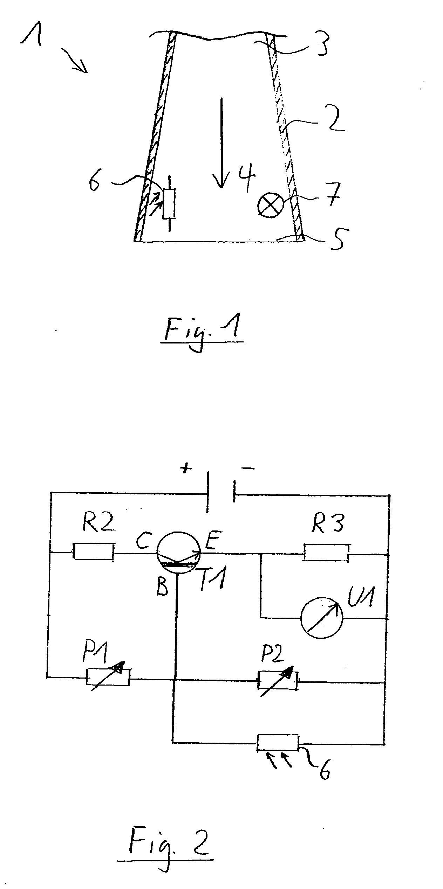

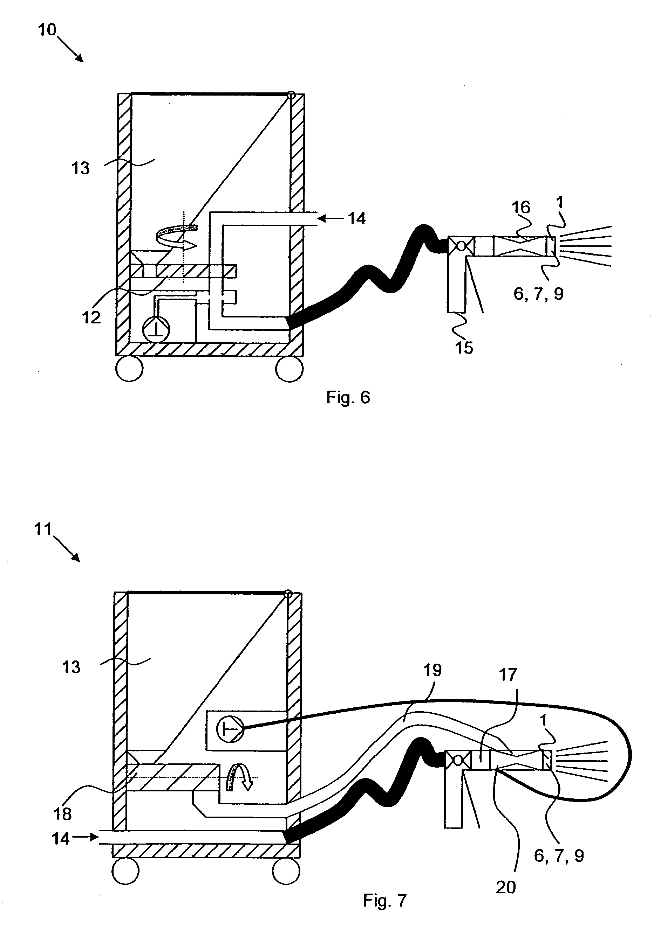

Die erfindungsgemäße Düse 1 (Fig. 1) ist als Düse für eine Reinigungseinrichtung 8, 10, 11 (Fig. 6, Fig.7) zum Reinigen mit einem Reinigungsmedium aus einem Gemisch aus cryogenem Medium und Druckluft, ausgebildet.

Die Düse 1 umfasst einen Düsenkörper 2. Der Düsenkörper 2 wird von einer Eingangsseite 3 in Strömungsrichtung 4 zu einer Ausgangsseite 5 durchströmt. An der Ausgangsseite 5 tritt das Reinigungsmedium bzw. das Gemisch aus cryogenem Medium und Druckluft aus.

Über die Reinigungseinrichtung 8, 10, 11 wird der Eingangsseite 3 der Düse 1 ein Reinigungsmedium zugeführt. Dieser Medienstrom besteht vorzugsweise aus Luft und expandiertem flüssigen CO₂ (CO₂-Schnee) oder Luft und CO₂-Pellets.

Im Bereich der Ausgangsseite 5 der Düse 1 ist innenseitig im Düsenkörper 2 ein optischer Sensor 6 integriert. Der optische Sensor 6 ist z.B. ein Fotowiderstand. Ein Fotowiderstand ist ein Halbleiter, dessen Widerstand von der Beleuchtungsstärke abhängt. Das heißt je mehr Licht auf den Fotowiderstand 6 einfällt desto geringer ist sein Widerstand und umgekehrt.

Gegenüberliegend zum optischen Sensor 6 ist in dem Düsenkörper 2 innenseitig eine Beleuchtungseinrichtung 7 integriert. Die Beleuchtungseinrichtung 7 kann eine Konstantlichtquelle sein und ist z.B. eine "light emitting diode" (LED), die vorzugsweise kurzwelliges, z.B. blaues Licht ausgibt. Der Wellenlängenbereich des blauen Lichts beträgt zwischen 420 nm und 490 nm.

Es können auch andere Beleuchtungseinrichtungen vorgesehen sein, wie z.B. ein Laser, die Licht in einem anderen Wellenlängenbereich ausgeben.

Der Laser kann ein Halbleiterlaser sein, der Licht mit einer Wellenlänge von 600 nm bis 700 nm ausgibt. Es ist vorteilhaft den Laser mit einer Blende und ggf. mit einer Umlenkung zur besseren Montage zu versehen.

Es können auch Laser verwendet werden, die Licht in einem anderen Wellenlängenbereich ausgeben und die andere Blenden verwenden.

Auf diese Weise wird eine Lichtschranke ausgebildet, wobei die Beleuchtungseinrichtung 7 den Sender und der optische Sensor 6 den Empfänger der Lichtschranke bildet.

In Figur 2 ist eine Schaltung gezeigt, gemäß der der Fotowiderstand 6 geschaltet sein kann.

Diese Schaltung ist eine Brücken bzw. H-Schaltung. Diese Brückenschaltung weist einen ersten und einen zweiten Zweig mit jeweils zwei in Reihe geschalteten Widerständen auf. Im ersten Zweig finden sich die Widerstände R2 und R3 und im zweiten Zweig sind zwei Potentiometer P1 und P2 in Reihe geschaltet. Die beiden Zweige sind jeweils über einen Brückenzweig miteinander verbunden, wobei der Brückenzweig an einen ersten und einen zweiten Zweig jeweils im Bereich zwischen den beiden Widerständen mit dem ersten und zweiten Zweig verbunden ist. Im Brückenzweig befindet sich der Widerstand R1. An der Verbindungsstelle zwischen dem Brückenzweig und dem ersten Zweig ist ein Transistor angeordnet, wobei der Widerstand R1 mit der Basis, der Widerstand R2 mit dem Kollektor und der Widerstand R3 mit dem Emitter E des Transistors T1 verbunden sind. Zum Widerstand R3 ist ein Spannungsmessgerät U1 parallel geschaltet. Zum Potentiometer P2 ist der Photowiderstand 6 parallel geschaltet.

Nach dem Umschalten des Transistors T1 ist die Spannung am Spannungsmessgerät U1 proportional zu dem auf den Fototransistor einfallenden Licht.

Die Empfindlichkeit der Schaltung ist über die beiden Potentiometer P1, P2 einstellbar. Über das Potentiometer P1 ist die Schaltschwelle und über das Potentiometer P2 ist die Empfindlichkeit des Transistors T1 einstellbar.

Fällt viel Licht auf den Fotowiderstand 6, weist dieser einen sehr geringen Widerstandswert auf. Die Spannung U1 ist dann gering.

Fällt wenig Licht auf den Fotowiderstand 6 weist dieser einen hohen Widerstandswert auf. Die Spannung U1 ist dann groß.

Die eben beschriebene Schaltung ist lediglich als Beispielschaltung beschrieben. Selbstverständlich sind auch andere Schaltungen mit einer ähnlichen Funktionsweise möglich. Es kann auch vorgesehen sein einzelne Komponenten oder Abschnitte der Schaltung gleichwertig zu ersetzen.

Es ist eine Steuereinrichtung (nicht dargestellt) zum Detektieren bzw. Überwachen des Medienstroms vorgesehen. Die Steuereinrichtung ist mit dem Spannungsmesser verbunden, um die Spannung U1 am Widerstand R3 auszulesen. Die Steuereinrichtung überwacht somit den Widerstandswert des Fotowiderstands. Dieser Widerstandswert wird z.B. aufgrund einer zuvor bestimmten Menge an Luft und CO₂ eingestellt wird. Insbesondere wird ein Bereich eingestellt umfassend einen maximalen und einen minimalen Anteil an CO₂ in der Luft.

Anhand der Spannung U1 des Widerstands R3 kann die Steuereinrichtung mehrere Betriebszustände feststellen.

Wenn die gemessene Spannung U1 einen vorbestimmten Spannungswert unterschreitet, dann wird dies als Zustand gemeldet, bei dem die Vorrichtung nicht ausreichend Reinigungsmedium ausgibt. Dies ist z.B. beim "Spucken" der Düse 1 der Fall und/oder wenn im Reinigungsmedium nicht ausreichend cryogenes Medium enthalten ist und/oder wenn zu wenig Reinigungsmedium ausgegeben wird. Die Steuereinrichtung meldet diesen Zustand durch Ausgeben z.B. eines akustischen oder optischen Signals. Die Steuereinrichtung kann auch entsprechend mehr Reinigungsmedium oder cryogenes Medium und/oder Luft zudosieren, um die gewünschte Ausgabe an Medium zu erzielen.

Wenn die gemessene Spannung U1 in einem vorher definierten Spannungsintervall liegt, wird dies als Zustand gemeldet, bei dem die Düse 1 und/oder die Reinigungseinrichtung 10, 11 ausreichend Reinigungsmedium ausgibt. Dies ist z.B. im normalen störungsfreien Betrieb der Fall. Die Steuereinrichtung meldet diesen Zustand ebenfalls durch Ausgeben z.B. eines akustischen oder optischen Signals.

Nachfolgend werden weitere Ausführungsbeispiele beschrieben, diese entsprechen, soweit nichts anderes beschrieben ist, dem in Figur 1 dargestellten Ausführungsbeispiel.

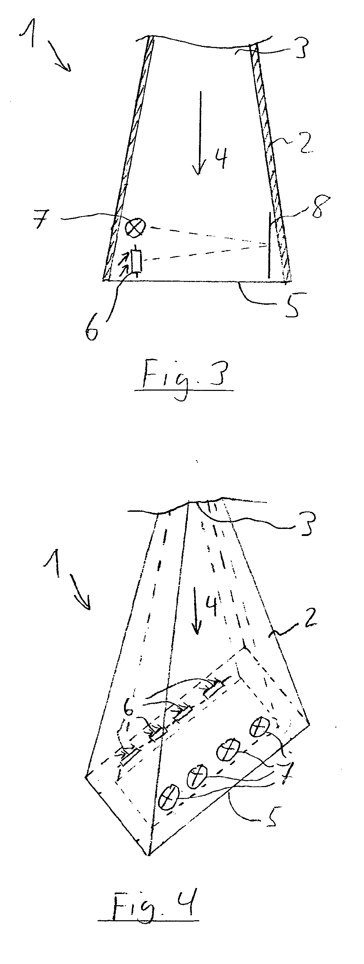

In einem zweiten Ausführungsbeispiel (Figur 3) der erfindungsgemäßen Düse ist die Beleuchtungseinrichtung 7 neben dem optischen Sensor 6 angeordnet. Der Beleuchtungseinrichtung 7 und dem optischen Sensor 6 gegenüberliegend ist am Düsenkörper 2 ein Spiegel 8 angeordnet. Der Spiegel 8 ist derart ausgebildet, dass der Spiegel 8 die von der Beleuchtungseinrichtung 7 ausgegebenen Lichtwellen auf den optischen Sensor 6 reflektiert.

Es kann eine Heizeinrichtung (nicht dargestellt) vorgesehen sein, um den Spiegel 8 zu beheizen. Dies ist insbesondere sinnvoll, wenn die Gefahr besteht, dass der Medienstrom den Spiegel einfriert, sodass dieser nicht mehr in der Lage ist, Lichtwellen ausreichend zu reflektieren.

Die Anordnung gemäß Figur 3 bildet ebenfalls eine Lichtschranke aus.

In einem weiteren Ausführungsbeispiel der erfindungsgemäßen Düse 1 (nicht dargestellt) ist der optische Sensor 6 als Kamera ausgebildet. Bei diesem Ausführungsbeispiel kann auch auf eine Beleuchtungseinrichtung 7 verzichtet werden, falls die Helligkeit des Umgebungslichtes, das auf der Ausgangsseite 5 der Düse 1 in den Düsenkörper 2 eintritt, ausreicht, um aussagekräftige Bilder zu erstellen.

Es ist sogar eine Ausführungsform mit Fototransistor ohne Beleuchtungseinrichtung denkbar, wenn, wie eben beschrieben, genügend Licht in den Düsenkörper 2 einfällt.

Die Düse 1 ist vorzugsweise eine Schneestrahldüse 22 zum Ausgeben eines Reinigungsmediums aus CO₂-Schnee und Luft 23. Die Düse 1 kann insbesondere als Venturidüse oder als Lavaldüse ausgebildet sein. Grundsätzlich könnnen alle Düsen vorgesehen werden, die zum Ausgeben eines Gemisches von CO₂-Partikeln und Druckluft auf eine zu reinigende Oberfläche ausgebildet sind.

Im folgenden wird die Reinigungseinrichtung zum Reinigen mit einem Gemisch aus cryogenem Medium und Luft beschrieben. Die Düse der Reinigungseinrichtung ist vorzugsweise als Schneestrahldüse 22 ausgebildet. Eine derartige Schneestrahldüse 22 ist zum Beispiel von der Firma Cryosnow, Berlin bekannt.

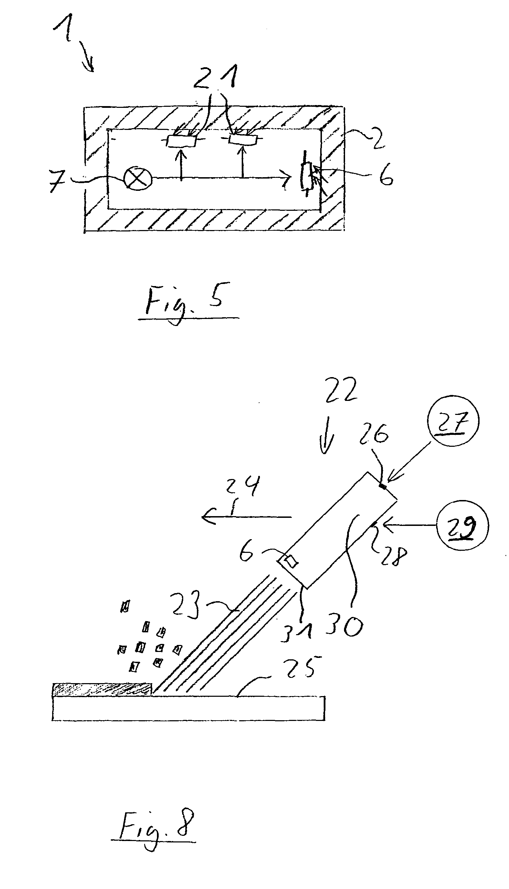

Die Schneestrahldüse 22 wird entlang einer Bewegungsrichtung 24 über eine zu reinigende Oberfläche 25 bewegt (Fig. 8). Die Schneestrahldüse 22 ist mit einem Druckluftanschluss 26 zum Zuführen von Druckluft aus einer Druckluftversorgung 27 und mit einem CO₂-Anschluss 28 zum Zuführen von flüssigem CO₂ aus einer Flüsssig-CO₂-Versorgung 29 versehen. Die Flüssig-CO₂-Versorgungs 29 ist als Niederdruckversorgung mit ca. 20 bar oder als eine Hochdruckversorgung über Flaschen oder Bündel ausgebildet. Die Druckluftversorgung 27 stellt Druckluft mit einem Druck von ca. 2 bar bis 15 bar bereit.

Die beiden Anschlüsse 26, 28 münden in eine in der Schneestrahldüse 22 ausgebildete Expansionskammer 30 zum Erzeugen von CO₂-Schneepartikein bzw. Trockeneispartikeln. In der Expansionskammer 30 werden besonders feste Trockeneispartikel erzeugt und sofort mit Druckluft am Düsenausgang 31 auf eine zu reinigende Oberfläche 25 gestrahlt.

Die Schneestrahldüse 22 ist gemäß den oben beschriebenen Ausführungsbeispielen mit einem optischen Sensor 6 zum Detektieren des ausgegebenen Gemisches versehen.

Bei dieser Ausführungsform der Reinigungseinrichtung ist vorteilhaft, dass keine komplizierte Lagerung wie bei Pellets notwendig ist. Bei einer derartigen Reinigungseinrichtung sind die Betriebskosten extrem niedrig, da lediglich eine Versorgung mit flüssigem CO₂ und Druckluft erforderlich ist.

Die Reinigungseinrichtung kann auch z.B. ein Druckstrahlgerät mit Ein-Schlauch-Strahlsystem 10 oder ein Gerät mit Ansaugprinzip mit Zwei-Schlauch-Strahlsystem 11 sein.

Beim Ein-Schlauch-Strahlsystem 10 (Fig. 6) werden über eine rotierende Luftschleuse 12 reiskorngroße Pellets von einem Vorratsbehälter 13 der Maschine in einen Druckluftstrom 14 zudosiert, in Richtung einer Strahlpistole 15 davongetragen und schließlich in einer Lavaldüse 16 auf annähernd Schallgeschwindigkeit beschleunigt und mittels der erfindungsgemäßen Düse 1 ausgegeben.

Die Zwei-Schlauch-Strahlsysteme 11 (Fig. 7) verwenden einen Druckluftstrom 14, der ein partielles Vakuum in einer Strahlpistole 17 erzeugt. Trockeneisgranulat wird aus einem Vorratsbehälter 13 des Gerätes über eine Dosierschnecke 18 in einen Ansaugbereich transportiert. Dort werden die Pellets vom Unterdruck im Strahlschlauch 19 mitgerissen und zu einer Venturidüse 20 befördert, wo sie beschleunigt werden und anschließend mittels der erfindungsgemäßen Düse 1 ausgegeben werden.

Bei den beiden eben beschriebenen Reinigungseinrichtungen ist die Strahlpistole mit einer Düse 1 gemäß den oben beschriebenen Ausführungsbeispielen versehen.

In einer weiteren Ausführungsform der erfindungsgemäßen Düse ist die Düse 1 als Düsenaufsatz 9 (Fig. 6, Fig. 7) zum Aufsetzen auf eine herkömmliche Düse 1 bzw. auf eine Strahlpistole (15, 17) ausgebildet.

Der Düsenaufsatz 9 weist eine ringförmige Hülse auf. Im Inneren der Hülse ist der optische Sensor angeordnet. Die Hülse ist an einem Ende mit einem Befestigungsmittel zum Verbinden mit der Düse versehen, wobei das Befestigungsmittel z.B. ein Gewinde ist.

Die Hülse 10 bzw. der Düsenaufsatz 9 wird von einer Eingangsseite, an der die Düse 1 angeordnet ist, in Strömungsrichtung 4 zu einer Ausgangsseite durchströmt, an der der Medienstrom austritt.

Die Anordnung des optischen Sensors und der Beleuchtungseinrichtung für den Düsenaufsatz 9 entsprechen den bereits oben beschriebenen Ausführungsformen für die Düse 1.

Im folgenden wird das Verfahren zum Überwachen der Ausgabe eines Gemisches aus cryogenem Medium und Luft an einer Düse 1 beschrieben.

Vor dem Betrieb der Vorrichtung muss die Menge an Reinigungsmedium, beispielsweise an Luft und cryogenem CO₂, bestimmt werden, die benötigt wird, um ein optimales Reinigungsergebnis zu erzielen.

Dabei kann eine Minimalmenge an Reinigungsmedium bestimmt werden, die ausreicht um die zu reinigende Oberfläche vollständig zu reinigen. Ob diese Menge ausgegeben wird stellt die Steuereinrichtung über die am Widerstand R3 anliegende Spannung U1 fest. Der Betrag dieser Spannung U1 hängt direkt vom Widerstandswert des Fotowiderstands ab. Ein Widerstandswert bei dem genügend Reinigungsmedium ausgegeben wird, wird im folgenden als Sollwert bezeichnet.

Die Schaltschwelle des Transistors wird ausgelöst, wenn der Widerstandswert des Fototransistors den vorher festgelegten Sollwert erreicht. An der Basis des Transistors liegt dann eine entsprechende Basis-Emitter-Spannung an. Durch diese Basis-Emitter-Spannung schaltet der Transistor durch und seine Ausgangsspannung am Emitterausgang ändert sich sprungartig. Die Spannung U1 steigt dann auf einen Wert an, den die Steuereinrichtung als Wert detektiert, bei dem genügend Reinigungsmedium ausgegeben wird.

Bevor der Medienstrom durch die Düse 1 bzw. zwischen dem Fotowiderstand 6 und der Beleuchtungseinrichtung 7 hindurchströmt, kommt das gesamte von der Beleuchtungseinrichtung 7 in Richtung Fotowiderstand ausgesendete Licht am Fotowiderstand 6 an. Dadurch stellt sich ein kleiner Widerstandswert am Fotowiderstand 6 ein, der kleiner als der Sollwert ist. In diesem Betriebszustand reicht die am Basisanschluss des Transistors anliegende Spannung nicht aus, um den Transistor durchzuschalten.

Bei Betriebsbeginn strömt ein von der Reinigungseinrichtung bereitgestellter Strom aus cryogenem Medium und Luft auf der Eingangsseite 3 der Düse 1 in den Düsenkörper 2 ein und durchströmt diesen in Strömungsrichtung 4.

Beim Zusammenführen des Gemisches aus cryogenem Medium und Luft in der Reinigungseinrichtung und oder der erfindungsgemäßen Düse 1 wird die Temperatur der Luft durch das cryogene Medium abgesenkt. Die in der Luft enthaltene Feuchtigkeit wird dadurch teilweise kondensiert. Die kondensierte Luftfeuchtigkeit bewirkt eine weiße Trübung des Medienstroms.

Dieser weiß getrübte Medienstrom strömt beim Betrieb der Vorrichtung am Fotowiderstand vorbei.

Durch die weiße Trübung wird das von der Beleuchtungseinrichtung 7 abgegebene Licht gestreut, wodurch weniger Licht auf den Fotowiderstand fällt. Hierdurch steigt der Widerstandswert des Fotowiderstands.

Solange der Sollwert noch nicht erreicht ist liegt die am Widerstand R3 abgegriffene Spannung U1 in einem Bereich, den die Steuereinrichtung als Zustand detektiert, bei dem noch nicht genügend Reinigungsmedium ausgegeben wird. Dies ist insbesondere beim eingangs beschriebenen "Spucken" der Vorrichtung kurz nach dem Einschalten der Fall.

Die Steuereinrichtung gibt daraufhin ein Signal z.B. ein optisches oder ein akustisches Signal aus, um anzuzeigen dass nicht genügend Medium und/oder Medium mit einer zu geringen Reinigungswirkung ausgegeben wird. Die Steuereinrichtung kann dann entweder warten bis ausreichend Medium ausgegeben wird oder entsprechend mehr Reinigungsmedium oder cryogenes Medium oder Luft zudosieren, um die gewünschte Ausgabe an Medium zu erzielen.

Wird das auf den Fotowiderstand einfallende Licht ausreichend durch den vorbeiströmenden weiß getrübten Medienstrom reduziert, weil ausreichend Reinigungsmedium ausgegeben wird, erhöht sich der Widerstandswert des Fotowiderstands. Erreicht der Widerstandswert den Sollwert erhöht sich der Strom an der Basis des Transistors. Auf diese Weise wird der Transistor durchgeschaltet.

Die Spannung U1 bzw. der Sollwert des Transistors ist dann gemäß den zuvor festgelegten Parametern groß genug. Die Steuereinrichtung detektiert diesen Zustand als Zustand bei dem genügend Medium ausgegeben wird. In diesem Zustand erzielt die Vorrichtung ein optimales Reinigungsergebnis. Auch dieser Zustand kann durch ein akustisches und/oder optisches Signal angezeigt werden.

In einer weiteren Ausführungsform der erfindungsgemäßen Vorrichtung (Fig. 4) ist vorgesehen mehrere optische Sensoren 6, insbesondere Fotowiderstände, und mehrere Beleuchtungseinrichtungen 7 einander gegenüberliegend anzuordnen. Insbesondere ist bei dieser Anordnung mit mehreren optischen Sensoren vorteilhaft, dass die Gleichmäßigkeit der Ausgabe des Reinigungsmediums über die gesamte Düsenbreite überwacht werden kann. Hierbei sind Düsenbreiten von z.B. 150 mm und mehr möglich.

In einer weiteren Ausführungsform (Fig. 5) sind zusätzlich z.B. ein oder zwei oder mehrere optische Sensoren 21, insbesondere Fotowiderstände seitlich zum Strahlengang des von der Beleuchtungseinrichtung 7 ausgesendeten Lichts angeordnet. Ansonsten entspricht die Düse 1 im wesentlichen dem in Figur 1 dargestellten Ausführungsbeispiel. Auf diese Weise kann nicht nur das Transmissionslicht erfasst werden, sondern mittels der seitlich angeordneten Sensoren 21, auch das Streulicht das vom cryogenen Medium im Reinigungsmedium reflektiert wird. Hierdurch ist es möglich den Anteil an cryogenem Medium im Reinigungsmedium exakt zu bestimmen. Im Gegensatz zu dem der Lichtquelle gegenüberliegenden Sensor 6, bei dem weniger Licht einfällt desto mehr Reinigungsmedium ausgegeben wird, wird die Menge an einfallendem Licht auf die seitlich angeordneten Sensoren größer je mehr cryogenes Medium im Reinigungsmedium enthalten ist da mehr Licht gestreut wird und auf die seitlich angeordneten Sensoren 21 trifft. Somit kann mittels der seitlich angeordneten Sensoren bzw. mittels des Streulichts bei einem größeren Anteil an cryogenem Medium dessen Anteil im Gesamtsrom erfasst werden. Die seitlich angeordneten Sensoren 21 werden dann umgekehrt zu den im Strahlengang der Lichtquelle angeordneten Sensoren 6 geschaltet, so dass wie z.B. bei in dem in Fig. 2 angeordneten Schaltbild der Fotowiderstand parallel zum Potentiometer P2 angeordnet ist.

Grundsätzlich sind Kombinationen der transmissiven Sensoren 6 und der seitlich angeordneten Sensoren 21 möglich.

Die Beleuchtungseinrichtung ist vorzugsweise derart ausgebildet, dass kurzwelliges Licht, beispielsweise blaues Licht, ausgegeben wird. Kurzwelliges Licht wird stärker gestreut als langwelliges Licht. Auf diese Weise ist es möglich, das Signal besser auszuwerten bzw. zu unterscheiden. Der Wellenlängenbereich des blauen Lichts beträgt zwischen 420 nm und 490 nm.

Die Beleuchtungseinrichtung kann aber auch Licht in jedem anderen möglichen Wellenlängebereich abgeben. Beispielsweise kann die Beleuchtungseinrichtung als Laser ausgebildet sein.

Es können auch mehrere Beleuchtungseinrichtungen vorgesehen sein, die Licht unterschiedlicher Wellenlänge ausgeben, wobei sich die Wellenlängen dann überlagern.

In einer weiteren Ausführungsform der erfindungsgemäßen Vorrichtung kann auch vorgesehen sein, dass die Beleuchtungseinrichtung ein gepulstes Licht abgibt, da z.B. zu viel in die Düse einfallendes Tageslicht die Auswertung erschweren bzw. stören kann.

Es kann beispielsweise auch vorgesehen sein, dass die erfindungsgemäße Vorrichtung in einer automatischen Fertigungsstrasse eingesetzt wird. Die Steuereinrichtung kann dann derart ausgebildet sein, dass sie durch ein eben beschriebenes Signal die gesamte Fertigung stoppt, um Ausschuss zu verhindern, oder dass mangelhaft gereinigte Teile erneut gereinigt werden oder als Ausschuss deklariert werden.

### Bezugszeichenliste

- 1: Düse
- 2: Düsenkörper
- 3: Eingangsseite
- 4: Strömungsrichtung
- 5: Ausgangsseite
- 6: Sensor
- 7: Beleuchtungseinrichtung
- 8: Spiegel
- 9: Düsenaufsatz
- 10: Ein-Schlauch-Strahlsystem
- 11: Zwei-Schlauch-Strahlsystem
- 12: rotierende Luftschleuse
- 13: Vorratsbehälter
- 14: Druckluftstrom
- 15: Strahlpistole
- 16: Lavaldüse
- 17: Strahlpistole
- 18: Dosierschnecke
- 19: Strahlschlauch
- 20: Venturidüse
- 21: Sensor
- 22: Schneestrahldüse
- 23: Reinigungsmedium
- 24: Bewegungsrichtung
- 25: Oberfläche
- 26: Druckluftanschluss
- 27: Druckluftversorgung
- 28: CO₂-Anschluss
- 29: Flüssig-CO₂-Versorgung
- 30: Expansionskammer
- 31: Düsenausgang

## Patentansprüche

1. Düse für eine Reinigungseinrichtung zum Reinigen mit einem Gemisch aus cryogenem Medium und Luft,
**dadurch gekennzeichnet,**
**dass** die Düse (1) mit einem optischen Sensor (6) zum Detektieren des Gemisches versehen ist.

2. Düse nach Anspruch 1,
**dadurch gekennzeichnet,**
**dass** der optische Sensor (6) ein Fototransistor oder eine Kamera ist.

3. Düse nach Anspruch 1 oder 2,
**dadurch gekennzeichnet,**
**dass** eine Beleuchtungseinrichtung (7) in der Düse (1) vorgesehen ist.

4. Düse nach Anspruch 3,
**dadurch gekennzeichnet,**
**dass** die Beleuchtungseinrichtung (7) ein Laser ist.

5. Düse nach einem der Ansprüche 1 bis 4,
**dadurch gekennzeichnet,**
**dass** die Beleuchtungseinrichtung (7) im Düseninneren dem optischen Sensor (6) gegenüberliegend angeordnet ist.

6. Düse nach einem der Ansprüche 1 bis 5,
**dadurch gekennzeichnet,**
**dass** die Beleuchtungseinrichtung (7) im Düseninneren neben dem optischen Sensor (6) angeordnet ist und dem optischen Sensor gegenüberliegend ein Spiegel (8) zum reflektieren des Lichtes der Beleuchtungseinrichtung angeordnet ist.

7. Düse nach Anspruch 6,
**dadurch gekennzeichnet,**
**dass** der Spiegel (8) beheizbar ausgebildet ist.

8. Düse nach einem der Ansprüche 1 bis 7,
**dadurch gekennzeichnet,**
**dass** die Schaltung zum Steuern bzw. Schalten des optischen Sensors (6) als Brückenschaltung mit zwei Zweigen ausgebildet ist, wobei in einem Zweig der Brückenschaltung zwei Potentiometer (P1, P2) in Reihe geschaltet sind, und die beiden Zweige über einen Brückenzweig miteinander verbunden sind und an einer Verbindungsstelle zwischen dem Brückenzweig und einem der beiden Zweige ein Transistor (T, 6) angeordnet ist.

9. Düse nach einem der Ansprüche 1 bis 8,
**dadurch gekennzeichnet,**
**dass** die Düse (1) als Lavaldüse oder als Venturidüse ausgebildet ist.

10. Düse nach einem der Ansprüche 1 bis 9,
**dadurch gekennzeichnet,**
**dass** das cryogene Medium CO₂ ist.

11. Düse nach einem der Ansprüche 1 bis 10,
**dadurch gekennzeichnet,**
**dass** die Düse (1) als Schneestrahldüse ausgebildet ist.

12. Reinigungseinrichtung zum Reinigen mit einem Gemisch aus cryogenem Medium und Luft,
**dadurch gekennzeichnet,**
**dass** die Reinigungseinrichtung (8, 10, 11) mit einer Düse (1) mit einem optischen Sensor (6) zum Detektieren des Gemisches nach einem der Ansprüche 1 bis 11 versehen ist.

13. Düsenaufsatz für eine Düse zum Reinigen mit einem Gemisch aus cryogenem Medium und Luft,
**dadurch gekennzeichnet,**
**dass** der Düsenaufsatz (9) ringförmig ausgebildet ist und am Düsenausgang einer Düse befestigbar ist und einen optischen Sensor zum Detektieren der Ausgabe des Gemisches aufweist.

14. Verfahren zum Überwachen der Ausgabe eines Gemisches aus cryogenem Medium und Luft an einer Düse,
**dadurch gekennzeichnet,**
**dass** an der Düse (1) die Ausgabe des Gemisches mittels eines optischen Sensors (6) anhand des Lichtdurchsatzes und/oder der Farbe des Gemisches detektiert wird.

15. Vorrichtung zum Reinigen mit einem Gemisch aus cryogenem Medium und Luft,
**dadurch gekennzeichnet,**
**dass** eine Steuereinrichtung vorgesehen ist, die das Verfahren nach Anspruch 14 ausführt.
